# EUROPEAN PATENT APPLICATION

(11) **EP 4 686 310 A1**
(43) Date of publication of application: **28.01.2026**
(21) Application number: 23927956.5
(22) Date of filing: 20.03.2023
(51) Int. Cl.: H04W 76/14

(54) **COMMUNICATION METHOD AND COMMUNICATION DEVICE FOR TUNNELED DIRECT LINK SETUP**

(71) Applicant: Beijing Xiaomi Mobile Software Co., Haidian District, Beijing 100085 (CN)
(72) Inventor: DONG, Xiandong, Beijing 100085 (CN)
(74) Representative: Dehns Germany Partnerschaft mbB
(86) International application number: PCT/CN2023/082594
(87) International publication number: WO 2024/192639

(57) **Abstract**

The present invention provides a communication method and communication device for tunneled direct link setup. The communication method comprises: determining a first radio frame, wherein the first radio frame identifies a response to a second STA requesting to establish a TDLS peer power save mode (TDLS peer PSM) with a third STA under a first connection; and sending the first radio frame under a second connection.

## Description

### TECHNICAL FIELD

The present disclosure relates to the field of wireless communications, and more particularly, to a communication method and communication device for Tunneled Direct Link Setup (TDLS).

### BACKGROUND

With rapid development of mobile communications, Wireless Fidelity (Wi-Fi) technology is also undergoing continuous research and development. Currently, Wi-Fi research involves Ultra High Reliability (UHR), which aims to improve the reliability of Wireless Local Area Network (WLAN) connectivity, reduce latency, increase manageability, increase throughput at different Signal to Noise Ratio (SNR) levels, and reduce device-level power consumption.

In UHR, the TDLS mechanism is important for transmission of low-latency services. In addition, to save power, a TDLS peer Power Save Mode (TDLS peer PSM) mechanism is proposed.

Furthermore, to achieve higher throughput, lower network latency, and greater reliability, it has introduced Multi-Link Operation (MLO) techniques in the Wi-Fi technology. Devices that support MLO are called Multi-Link Devices (MLDs). MLDs may include Access Point Multi-Link Devices (AP MLDs) and non-Access Point Multi-Link Devices (non-AP MLDs). Currently, the mechanism for TDLS peer PSM setup for multi-link devices is not yet complete.

### SUMMARY

According to an illustrative embodiment of the present disclosure, a communication method for Tunneled Direct Link Setup (TDLS) is provided. The communication method can be applied to a first station device (STA) and can include: determining a first frame, where the first frame indicates a response to a second STA requesting to set up a TDLS peer Power Save Mode (TDLS peer PSM) with a third STA on a first link; and transmitting the first frame on a second link, where the first STA and the third STA belong to the same non-Access Point Multi-Link Device (non-AP MLD).

According to an illustrative embodiment of the present disclosure, a communication method for Tunneled Direct Link Setup (TDLS) is provided. The communication method can be applied to a second STA and can include: receiving a first frame from a first STA, where the first frame indicates a response to the second STA requesting to set up a TDLS peer Power Save Mode (TDLS peer PSM) with a third STA on a first link, the first frame is received on a second link, and the first STA and the third STA belong to the same non-Access Point Multi-Link Device (non-AP MLD).

According to an illustrative embodiment of the present disclosure, a communication device for TDLS is provided. The communication device can be applied to a first STA and can include: determining a first frame, where the first frame indicates a response to a second STA requesting to set up a TDLS peer Power Save Mode (TDLS peer PSM) with a third STA on a first link; and a transceiver module configured to transmit the first frame on a second link, where the first STA and the third STA belong to the same non-Access Point Multi-Link Device (non-AP MLD).

According to an illustrative embodiment of the present disclosure, a communication device for TDLS is provided. The communication device can be applied to a second STA and can include a transceiver module configured to: receive a first frame from a first STA, where the first frame indicates a response to the second STA requesting to set up a TDLS peer Power Save Mode (TDLS peer PSM) with a third STA on a first link, the first frame is received on a second link, and the first STA and the third STA belong to the same non-Access Point Multi-Link Device (non-AP MLD).

According to an illustrative embodiment of the present disclosure, an electronic device is provided. The electronic device includes a memory, a processor, and a computer program that is stored in the memory and executable on the processor. The computer program, when being executed by the processor executes, implements the method described above.

According to an illustrative embodiment of the present disclosure, a computer-readable storage medium is provided. The computer-readable storage medium stores a computer program. The computer program, when being executed by the processor executes, implements the method described above.

Additional aspects and advantages of the embodiments of the present disclosure will be provided in part in the following description, which will become apparent from the following description or be learned through practice of the present disclosure.

### BRIEF DESCRIPTION OF THE DRAWINGS

The above and other features of the embodiments of the present disclosure will become more apparent through detailed description of the illustrative embodiments of the present disclosure with reference to the accompanying drawings, in which:
FIG. 1 shows a communication method for TDLS according to an illustrative embodiment;
FIG. 2 shows a communication method for TDLS according to an illustrative embodiment;
FIG. 3 is an interactive flow chart illustrating TDLS peer PSM setup according to an embodiment of the present disclosure;
FIG. 4 is a flowchart of a communication method for TDLS according to an illustrative embodiment of the present disclosure;
FIG. 5 is a flowchart illustrating a communication method for TDLS according to an illustrative embodiment of the present disclosure; and
FIG. 6 is a block diagram illustrating a communication device according to an embodiment of the present disclosure.

### DETAILED DESCRIPTION

The following description with reference to the accompanying drawings is provided to assist in a comprehensive understanding of the various embodiments of the present disclosure as defined by the appended claims and their equivalents. The various embodiments of the present disclosure include various specific details, but these specific details are to be considered as illustrative only. In addition, for the sake of clarity and brevity, descriptions of well-known technologies, functions, and configurations may be omitted.

The terms and wording used in the present disclosure are not limited to the bibliographical meanings, but are used by the inventor only to enable a clear and consistent understanding of the present disclosure. Therefore, for those skilled in the art, the description of the various embodiments of the present disclosure is provided for the purpose of illustration only and not for the purpose of limitation.

It should be understood that, the singular forms "a", "an", "said", and "the" as used herein may also include the plural forms unless the context clearly indicates otherwise. It should be further understood that, the wording "comprising/including" as used in the present disclosure refers to presence of the described features, integers, steps, operations, elements, and/or components, but does not preclude the presence or addition of one or more other features, integers, steps, operations, elements, components, and/or groups thereof.

It will be understood that although the terms "first", "second", etc., may be used herein to describe various elements, these elements should not be limited by these terms. These terms are only used to distinguish one element from another. Thus, without departing from the teachings of the illustrative embodiments, the first element discussed below may be referred to as the second element.

It should be understood that when an element is referred to as being "connected" or "coupled" to another element, it can be directly connected or coupled to the other element, or an intervening element may be present. Furthermore, as used herein, "connected" or "coupled" may include wirelessly connected or wirelessly coupled. As used herein, the term "and/or" or the expression "at least one of' includes any and all combinations of one or more of the associated listed items.

Unless otherwise defined, all terms (including technical and scientific terms) used herein have the same meaning as commonly understood by those of ordinary skill in the art to which the present disclosure belongs.

In a wireless local area network, a Basic Service Set (BSS) may consist of an Access Point (AP) and one or more non-Access Points (also referred to herein as stations (STAs) or station devices) that communicate with the AP. A basic service set can connect to a Distribution System (DS) through its AP, and then connect to another basic service set to form an Extended Service Set (ESS).

An AP is a wireless switch used in a wireless network and serves as an access device in the wireless network. The AP device can be used as a wireless base station, primarily as a bridge connecting the wireless network and a wired network. The wired and wireless networks can be integrated using such access point (AP).

The AP may include software applications and/or circuits to enable other types of nodes in the wireless network to communicate with the outside and inside of the wireless network through the AP. In some examples, the AP may be, for example, a terminal device or network device equipped with a Wi-Fi chip.

As an example, a station (STA) may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

In an illustrative embodiment of the present disclosure, the AP and ST may be multi-link devices, for example, and may be represented as an AP MLD and a non-AP MLD, respectively. The AP MLD may have multiple subordinate APs operating under different links, and the non-AP MLD may have multiple subordinate STAs operating under different links.

The TDLS technology enables two STAs in the same Basic Service Set (BSS) to bypass the AP and transmit data directly after setting up a TDLS link, without being constrained by the AP, and to use the highest rate standard supported by the two STAs for the direct transmission. The direct transmission can be performed on the original channel or can be switched to a new, extended channel, thus avoiding data transmission delays caused by network congestion, which is important for low-latency service transmission. Furthermore, in order to save power, the TDLS peer PSM mechanism is proposed. Specifically, the TDLS peer PSM mechanism is a power saving mechanism that can be used between TDLS peer STAs, and is based on a periodic wake-up schedule.

The embodiments of the present disclosure provide a communication method and communication device for Tunneled Direct Link Setup (TDLS), which are applicable to the setup manner of the TDLS peer PSM mechanism for multi-link devices.

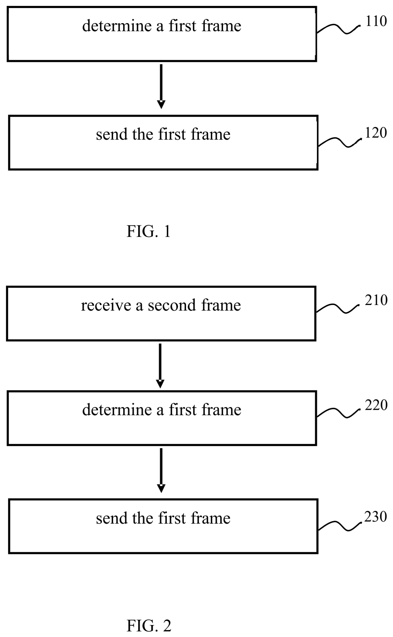

FIG. 1 illustrates a communication method for Tunneled Direct Link Setup (TDLS) according to an illustrative embodiment. The communication method shown in FIG. 1 can be applied to a first station device (hereinafter referred to as a "first STA"). According to an embodiment of the present disclosure, the first STA may be a station subordinate to a first non-AP MLD (e.g., a TDLS peer PSM responder).

Referring to FIG. 1, in operation 110, the first STA can determine a first frame, where the first frame indicates a response to a second STA requesting to set up a TDLS peer Power Save Mode (TDLS peer PSM) with a third STA on a first link.

According to an illustrative embodiment of the present disclosure, the first frame may be a TDLS peer Power Save (TDLS peer PSM) response frame. The third STA and the first STA may be affiliated with the same non-AP MLD (i.e., the first non-AP MLD (a TDLS peer PSM responder)), and the second STA may be affiliated with another non-AP MLD (e.g., a TDLS peer PSM initiator, hereinafter referred to as the second non-AP MLD). The first link may be a TDLS link established between the second STA and the third STA.

In an illustrative embodiment of the present disclosure, the second STA (e.g., a TDLS peer PSM initiator) may initiate a request (e.g., send a TDLS peer PSM request frame) to set up a TDLS peer PSM with a third STA (e.g., a TDLS peer PSM responder) on a first link. The first STA, which is affiliated with the same non-AP MLD as the third STA, may determine a TDLS peer PSM response frame for the TDLS peer PSM request frame. The TDLS peer PSM response frame may include a response to the second STA's request to set up the TDLS peer PSM with the third STA. In other words, an STA affiliated with a non-AP MLD may set up a TDLS peer PSM for another STA affiliated with the same non-AP MLD.

In operation 120, the first STA can send the first frame on a second link. According to an embodiment of the present disclosure, the second link may be the same as the link through which the request to set up the TDLS peer PSM (e.g., the TDLS peer PSM request frame) is received. That is, the first STA may transmit the first frame (e.g., the TDLS peer PSM response frame) on the link through which the TDLS peer PSM request frame was received. In other words, the TDLS peer PSM mechanism for the first link (TDLS link) can be set up on the second link, allowing the first link to quickly enter a power saving state. For example, the first link may be currently in a service data transmission state, and setting up the TDLS peer PSM mechanism on the second link allows the first link to quickly enter the power saving state without affecting the service data being transmitted.

An embodiment of the present disclosure provides a communication method for Tunneled Direct Link Setup (TDLS). This communication method can be applied to a first STA and can include: determining a first frame, where the first frame indicates a response to a second STA requesting to set up a TDLS peer Power Save Mode (TDLS peer PSM) with a third STA on a first link; and transmitting the first frame on a second link, where the first STA and the third STA belong to the same non-AP MLD, the first frame (e.g., a TDLS peer PSM response frame) can include a status identifier, and the status identifier can indicate an acceptance situation for the second STA requesting to set up the TDLS peer PSM. In other words, the first frame determined by the first STA can indicate, through the status identifier, the third STA's acceptance situation with respect to the second STA's request to set up the TDLS peer PSM on the first link.

For example, the status identifier in the first frame may be set to a first value (e.g., indicating "success") to indicate that the third STA accepts the request of the second STA (e.g., the TDLS peer PSM initiator). In this case, the first request frame may not include a wakeup schedule information element. For example, the second STA may send a TDLS peer PSM request frame, which may include a wakeup schedule information element about requesting to set up the TDLS peer PSM with the third STA. If the third STA accepts the request of the second STA, that is, the third STA can accept the wakeup schedule information element in the TDLS peer PSM request frame sent by the second STA, the wakeup schedule information element may not be included in the first frame, thus saving signaling.

For example, the status identifier in the first frame may be set to a second value (e.g., indicating "reject") to indicate that the third STA rejects the request of the second STA (e.g., the TDLS peer PSM initiator).

In an embodiment of the present disclosure, in the case where the status identifier in the first request frame is identified as "reject", the first frame may not include a wakeup schedule information element. For example, the third STA may still have service data to be transmitted, so it rejects the request of the second STA, that is, the third STA rejects the wakeup schedule information element of the TDLS peer PSM request frame sent by the second STA and will not enter the power saving mode. Therefore the first frame may not include the wakeup schedule information element, thus saving signaling.

For example, the status identifier in the first frame may be set to a third value (e.g., indicating "reject with alternative provided") to indicate that though the third STA rejects the request of the second STA (e.g., the TDLS peer PSM initiator), but can provide to the second STA an alternative for setting up the TDLS peer PSM mechanism. In this case, the first request frame may include a wakeup schedule information element. For example, the second STA may send the TDLS peer PSM request frame, which may include a wakeup schedule information element about requesting to set up the TDLS peer PSM with the third STA. The third STA can reject the wakeup schedule information element of the TDLS peer PSM request frame sent by the second STA or reject part of it, and may include a wakeup schedule information element proposed by the third STA in the first frame, so that it can negotiate with the TDLS peer PSM initiator (the second STA) to set up the TDLS peer PSM mechanism.

According to an embodiment of the present disclosure, the wakeup scheduling information element may have a format as shown in Table 1 below.

**Table 1.**

| Information content | Element ID | length | Offset | interval | Awake window Slots | Maximum Awake Window Duration | Idle Count |
|---|---|---|---|---|---|---|---|
| Octets | 1 | 1 | 4 | 4 | 4 | 4 | 2 |

Referring to Table 1, the wakeup schedule information element may include: an element identification (Element ID) of the wakeup schedule information element, a length field (Length), an offset, an interval, awake window slots, maximum awake window duration, and an idle count. The maximum awake window duration (awake window slots) field can be set to the maximum duration of the awake window in microseconds. The idle count field can be set to the number of consecutive awake windows in which no individual addressing frame is received from the TDLS peer STA before the TDLS peer STA deletes the wakeup schedule.

It should be understood that the contents shown in Table 1 are merely illustrative and not intended to limit the present disclosure. Furthermore, while the various contents shown in Table 1 are illustratively listed in the same table, this does not necessarily mean that all contents in Table 1 must be present simultaneously, and they may vary depending on the implementation. Furthermore, while Table 1 shows the size (number of bits) of each field, this is merely illustrative and not intended to limit the present disclosure.

An embodiment of the present disclosure provides a communication method for Tunneled Direct Link Setup (TDLS). The communication method can be applied to a first STA and can include: determining a first frame, where the first frame indicates a response to a second STA requesting to set up a TDLS peer Power Save Mode (TDLS peer PSM) with a third STA on a first link; and transmitting the first frame on a second link, where the first STA and the third STA belong to the same non-AP MLD, the first frame can include a Basic Service Set Identifier (BSSID), and the BSSID is an identifier of a basic service set to which an access point device corresponding to a third link used to establish the first link belongs.

For example, the BSSID can be carried by a link identifier information element in the first frame. According to an embodiment of the present disclosure, the link identifier information element may have a format such as shown in Table 2 below.

**Table 2.**

| Information content | Element ID | Length | BSSID | TDLS initiator STA Address | TDLS responder STA Address |
|---|---|---|---|---|---|
| Octets | 1 | 1 | 6 | 6 | 6 |

Referring to Table 2, the link identifier information element may include: an element identification (Element ID) of the link identifier information element, a length field (Length), BSSID, a TDLS initiator STA address, and a TDLS responder STA address. It should be understood that the contents shown in Table 2 are merely illustrative and not limiting of the present disclosure. Furthermore, while the various contents shown in Table 2 are illustratively listed in the same table, this does not necessarily mean that all contents in Table 2 must be present simultaneously, and they may vary depending on the implementation. Furthermore, while Table 2 shows the size (number of bits) of each field, this is merely illustrative and not limiting of the present disclosure.

In an embodiment of the present disclosure, the second ST may send a request to establish a TDLS link with the third ST to a corresponding AP through a third link, and the corresponding AP may forward the request to the third ST. If the third STA accepts the establishing request, the TDLS link (i.e., the first link) may be established between the second STA and the third STA, and the first link may be identified by an identifier (BSSID) of a basic service set to which the corresponding AP belongs. Therefore, the first frame can carry the BSSID to indicate the first link. That is, the TDLS peer PSM response frame including the BSSID may indicate that the response is with respect to the TDLS peer PSM regarding the first link initiated by the second STA to the third STA. According to an embodiment of the present disclosure, the BSSID in the first frame may be the same as the BSSID in a second frame requesting the TDLS peer PSM (e.g., a TDLS peer PSM request frame) sent by the second STA. In this way, an STA affiliated with a non-AP MLD can set up a TDLS peer PSM for another STA affiliated with the same non-AP MLD.

FIG. 2 illustrates a communication method for Tunneled Direct Link Setup (TDLS) according to an illustrative embodiment. The communication method shown in FIG. 2 can be applied to a first station device (hereinafter referred to as the "first STA"). According to an embodiment of the present disclosure, the first STA may be a station affiliated with a first non-AP MLD (e.g., a TDLS peer PSM responder).

Referring to FIG. 2, in operation 210, the first STA can receive a second frame. For example, the first STA may receive the second frame on a second link. The second frame indicates that a second STA requests to set up a TDLS peer PSM with a third STA on a first link. The first STA and the third STA belong to the same non-AP MLD. For example, the second frame may be a TDLS peer PSM request frame, which is used to initiate a TDLS peer PSM mechanism with the third STA on the first link.

According to an embodiment of the present disclosure, the second request frame may be received by the first STA from a corresponding AP. For example, the second STA may send a second request frame to the corresponding AP, and the corresponding AP may forward the second request frame to the first STA.

According to an embodiment of the present disclosure, the second request frame may include a BSSID, which is the identifier of a Basic Service Set (BSS) to which an access point device corresponding to a third link used to establish the first link belongs. In the embodiment of the present disclosure, the second STA may send a request to set up a TDLS link with the third STA to the corresponding AP on the third link, and the corresponding AP may forward the setup request to the third STA. If the third STA accepts the setup request, the TDLS link (i.e., the first link) can be set up between the second and third STAs, and the first link can be identified by an identifier (BSSID) of a basic service set to which the corresponding AP belongs. Therefore, in the second frame, the second frame carrying the BSSID may indicate that the second STA initiates a TDLS peer PSM regarding the first link to the third STA.

In operation 220, the first STA may determine a first frame. For example, the first STA may determine the first frame based on the second frame. The first frame may indicate a response to the second STA's request to set up a TDLS peer Power Save Mode (TDLS peer PSM) with a third STA on the first link. In an embodiment of the present disclosure, the first frame may include a BSSID that is the same as the BSSID in the second frame in operation 210. By carrying the same BSSID in the first frame as in the second frame, an STA affiliated with a non-AP MLD may set up a TDLS peer PSM for another STA affiliated with the same non-AP MLD.

The embodiment in the operation 220 may be similar to the operation 110 described above with reference to FIG. 1, and for the sake of brevity, repeated description is omitted here.

In operation 230, the first STA can send the first frame. For example, the first STA may transmit the first frame on the second link (i.e., on a link through which the second frame is received). The embodiment in the operation 230 may be similar to the operation 120 described above with reference to FIG.1, and for the sake of brevity, repeated description is omitted here.

An embodiment of the present disclosure provides a communication method for Tunneled Direct Link Setup (TDLS). The communication method can be applied to a first STA and can include: receiving a second frame on a second link, where the second frame indicates that a second STA requests to set up a TDLS peer PSM with a third STA on a first link; determining a first frame, where the first frame indicates a response to the second STA's request to set up the TDLS peer PSM with the third STA on the first link; and sending the first frame on the second link, where the first STA and the third STA belong to the same non-AP MLD.

According to an embodiment of the present disclosure, the second frame may be a TDLS peer power save (TDLS peer PSM) request frame, and the first frame may be a TDLS peer power save (TDLS peer PSM) response frame. The third STA and the first STA may be affiliated with the same non-AP MLD (i.e., the first non-AP MLD (a TDLS peer PSM responder)), and the second STA may be affiliated with another non-AP MLD (e.g., a TDLS peer PSM initiator, hereinafter referred to as the second non-AP MLD). The first link may be a TDLS link established between the second STA and the third STA. The first frame may be transmitted on the link through which the second frame is received.

According to an embodiment of the present disclosure, the first link may include one or more TDLS links. In this case, the second frame may include a wakeup schedule information element corresponding to the one or more TDLS links, and the first frame may include a status identifier, a basic service set identifier (BSSID) or a wakeup scheduling information element corresponding to the one or more TDLS links, respectively.

For example, the first frame (TDLS peer PSM response frame) may have the content shown in Table 3 below.

**Table 3.**

| Order | Information |
|---|---|
| 1 | Category |
| 2 | TDLS Action |
| 3 | Dialog Token |
| 4 | Status Code |
| 5 | Link Identifier |
| 6 | Wakeup Schedule |

The link identifier may correspond to the link identifier information element described above with reference to Table 2, which may include the BSSID corresponding to the TDLS link. When there is a request for the TDLS peer PSM for multiple TDLS links, there may be multiple link identifiers, and thus BSSIDs respectively corresponding to the multiple TDLS links may be included. The status code may correspond to the status identifier described above and may be set (to a first value, a second value, or a third value) corresponding to the BSSID to indicate whether the TDLS peer PSM mechanism on the corresponding TDLS link as requested is accepted. The wakeup schedule may correspond to the wakeup schedule information element described above with reference to Table 1, and may be selectively included according to the setting of the status code on the corresponding TDLS link.

That is, according to the embodiment of the present disclosure, if the TDLS peer PSM request frame includes the wakeup schedule information elements corresponding to multiple direct TDLS links, the TDLS peer PSM responder can reject or accept part or all of them, that is, the status code can be set (can be set to a first value (success), a second value (reject) or a third value (reject with alternative provided));and then the TDLS peer PSM response frame can include a combination of multiple status code + link identifier + wakeup schedule (optional).

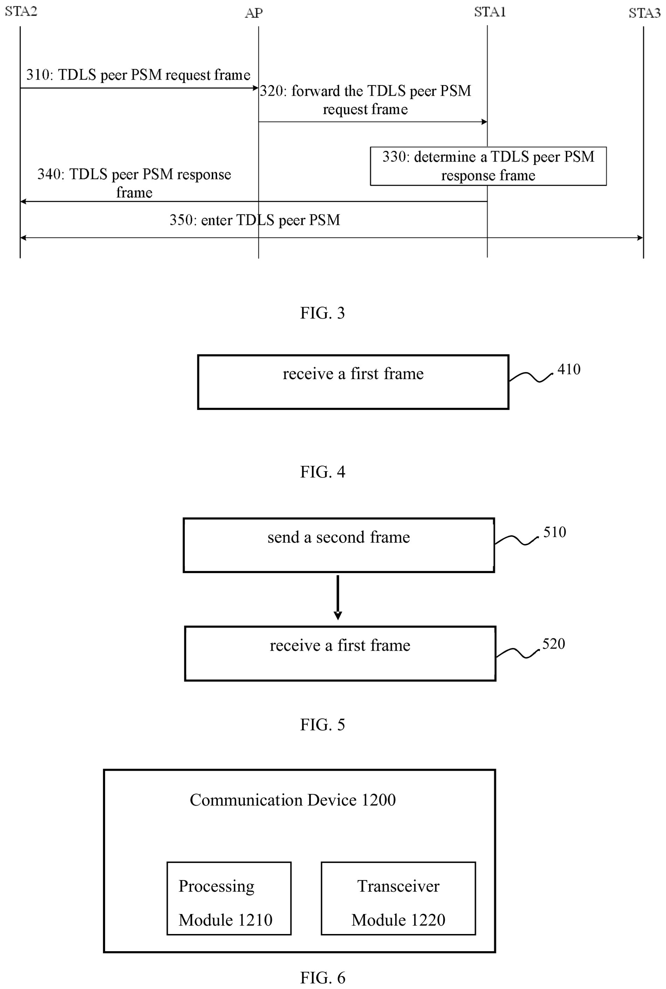

FIG. 3 is an interaction flowchart illustrating TDLS peer PSM setup according to an embodiment of the present disclosure. In FIG. 3, the third STA and the first STA may be affiliated with the same non-AP MLD (i.e., a TDLS peer PSM responder), and the second STA may be affiliated with another non-AP MLD (e.g., a TDLS peer PSM initiator). The first link may be a TDLS link established between the second STA and the third STA.

Referring to FIG. 3, in operation 310, STA2 may send a TDLS peer PSM request frame (i.e., the second frame described above) to the AP. In operation 320, the AP may forward the TDLS peer PSM request frame to STA1. The TDLS peer PSM request frame may be a frame for STA2 to request to set up a TDLS peer PSM with STA3 on the first link. According to an embodiment of the present disclosure, the TDLS peer PSM request frame may include a BSSID indicating the first link and a wakeup schedule information element corresponding to the first link. The TDLS peer PSM request frame may be similar to the embodiment described above regarding the second frame, and for the sake of brevity, repeated description is omitted here.

In operation 330, STA1 may determine a TDLS peer PSM response frame (i.e., the first frame described above). The TDLS peer PSM response frame may indicate a response to the second STA's request to set up the TDLS peer PSM with the third STA on the first link. That is, the TDLS peer PSM response frame may be a response to the TDLS peer PSM request frame. The TDLS peer PSM response frame may include a BSSID corresponding to the first link, a status identifier (status code), or a wakeup schedule information element. Operation 330 may be similar to the embodiment described above regarding the first frame, and for the sake of brevity, repeated description is omitted here.

In operation 340, STA1 may send the TDLS peer PSM response frame to STA2. For example, STA1 may directly send the TDLS peer PSM response frame to STA2 on the link through which the TDLS peer PSM request frame is received. Operation 340 may be similar to the embodiment of 120 described above with reference to FIG. 1 and the embodiment of 230 described above with reference to FIG. 2, and for the sake of brevity, repeated description is omitted here.

In operation 350, if it is identified in the TDLS peer PSM response frame that STA3 accepts the TDLS peer PSM requested by the TDLS peer PSM request frame (when a status identifier (status code) in the TDLS peer PSM response frame is set to a first value "success") or STA2 accepts a wakeup schedule information element proposed in the TDLS peer PSM response frame (when the status identifier (status code) in the TDLS peer PSM response frame is set to a third value "reject with alternative provided"), the TDLS link between STA2 and STA3 may enter the TDLS peer PSM, and TDLS power save communication is performed according to the negotiated wakeup schedule information element.

Although FIG. 3 shows only entering the TDLS peer PSM on one link, the present disclosure is not limited thereto, and multiple links affiliated with the same non-AP MLD may enter the TDLS peer PSM through the TDLS peer PSM response frame.

Furthermore, while the present disclosure illustrates that STA1 can set up the TDLS peer PSM mechanism with other STAs affiliated with the same non-AP MLD through the TDLS peer PSM response frame, the present disclosure is not limited thereto, and STA1 can also set up its own TDLS peer PSM mechanism. In other words, the third STA in FIGS. 1 and 2 may include one or more STAs, including the first STA.

FIG. 4 is a flow chart showing TDLS of a communication method according to an illustrative embodiment of the present disclosure. The communication method shown in FIG. 4 can be applied to a second STA.

Referring to FIG. 4, in operation 410, the second STA may receive a first frame from a first STA, where the first frame indicates a response to the second STA requesting to set up a TDLS peer Power Save Mode (TDLS peer PSM) with a third STA on a first link, and the first frame is received on a second link.

For example, the third STA and the first STA may be affiliated with the same non-AP MLD (i.e., the first non-AP MLD (a TDLS peer PSM responder)), and the second STA may be affiliated with another non-AP MLD (e.g., a TDLS peer PSM initiator, hereinafter referred to as the second non-AP MLD). The first link may be a TDLS link established between the second STA and the third STA.

Optionally, according to an embodiment of the present disclosure, the first frame may include a status identifier, which indicates an acceptance situation for the request to set up the TDLS peer PSM. For example, the status identifier in the first frame may be set to a first value (e.g., indicating "success") to indicate that the third STA accepts the request of the second STA (e.g., the TDLS peer PSM initiator). In this case, the first request frame may not include a wakeup schedule information element. For example, the status identifier in the first frame may be set to a second value (e.g., indicating "reject") to indicate that the third STA rejects the request of the second STA (e.g., the TDLS peer PSM initiator). In this case, the first request frame may not include the wakeup schedule information element, either. For example, the status identifier in the first frame may be set to a third value (e.g., indicating "reject with alternative provided") to indicate that although the third STA rejects the request of the second STA (e.g., the TDLS peer PSM initiator), an alternative for setting up the TDLS peer PSM mechanism may be provided to the second STA.

Optionally, according to an embodiment of the present disclosure, in the case where the status identifier is set to "reject with alternative provided", the first frame may further include the wakeup schedule information element. The wakeup schedule information element may be similar to the embodiment described above with reference to Table 1. For the sake of brevity, repeated description is omitted here.

FIG. 5 is a flow chart illustrating a communication method of TDLS according to an illustrative embodiment of the present disclosure. The communication method shown in FIG. 4 can be applied to a second STA.

Referring to FIG. 5, in operation 510, the second STA may send a second frame on a second link. The second frame may indicate that the second STA requests to set up a TDLS peer PSM with a third STA on a first link. For example, the third STA and the first STA may be affiliated with the same non-AP MLD (i.e., the first non-AP MLD (a TDLS peer PSM responder)), and the second STA may be affiliated with another non-AP MLD (e.g., a TDLS peer PSM initiator, hereinafter referred to as the second non-AP MLD). The first link may be a TDLS link established between the second STA and the third STA. Operation 510 may be similar to operations 310 and 320 in FIG. 3, and for the sake of brevity, repeated description is omitted here.

In operation 520, the second STA may receive a first frame from the first STA, where the first frame may indicate a response to the second STA's request to set up the TDLS peer Power Save Mode (TDLS peer PSM) with the third STA on the first link, and the first frame is received on the second link. Operation 520 may be similar to operation 340 in FIG. 3, and for the sake of brevity, repeated description is omitted here.

Optionally, according to an embodiment of the present disclosure, the first frame may include a basic service set identifier (BSSID), where the BSSID is an identifier of a basic service set to which an access point device corresponding to a third link used for establishing the first link belongs. In addition, the BSSID is the same in the first frame and the second frame.

Optionally, according to an embodiment of the present disclosure, the first link may include multiple TDLS links, the second frame may include wakeup scheduling information elements corresponding to the multiple TDLS links, the first frame may include status identifiers, basic service set identifiers (BSSIDs) or wakeup scheduling information elements corresponding to the multiple TDLS links, respectively.

FIG. 6 is a block diagram illustrating a communication device according to an embodiment of the present disclosure.

Referring to FIG. 6, a communication device 1200 may include a processing module 1210 and a transceiver module 1220. The communication device shown in FIG. 6 may be applied to a first STA or a second STA.

In a case where the communication device shown in FIG. 6 is applied to a first STA, the processing module 1210 may be configured to: determine a first frame, where the first frame indicates a response to a second STA requesting to set up a TDLS peer PSM with a third STA on a first link; and the transceiver module 1220 may be configured to: send the first frame on a second link, where the first STA and the third STA may belong to the same non-AP MLD.

In the case where the communication device shown in FIG. 6 is applied to the first STA, the communication device 1200 can perform the communication methods described with reference to FIG. 1 and FIG. 2 and the operations performed by the first STA in FIG. 3. For the sake of simplicity, repeated description is omitted here.

In a case where the communication device shown in FIG. 6 is applied to a second STA, the transceiver module 1220 may be configured to receive a first frame from a first STA, where the first frame indicates a response to the second STA requesting to set up a TDLS peer Power Save Mode (TDLS peer PSM) with a third STA on a first link, and the first frame is received on the second link. The processing module 1210 may be configured to control the operation of the transceiver module 1220.

In the case where the communication device shown in FIG. 6 is applied to the second STA, the communication device 1200 may perform the communication methods described with reference to FIG. 4 and FIG. 5 and the operations performed by the second STA in FIG. 3. For the sake of simplicity, repeated description is omitted here.

In addition, the communication device 1200 shown in FIG. 6 is merely illustrative, and the embodiments of the present disclosure are not limited thereto. For example, the communication device 1200 may further include other modules, such as a memory module, etc. In addition, the various modules in the communication device 1200 may be combined into a more complex module, or may be divided into more separate modules.

The communication method and communication device according to the embodiments of the present disclosure improve the TDLS link power saving negotiation mechanism of non-AP MLD supporting multi-link communication, so that it can be adapted to UHR requirements.

Based on the same principle as that of the methods provided in the embodiments of the present disclosure, the embodiments of the present disclosure also provide an electronic device, which includes a processor and a memory; where the memory stores machine-readable instructions (also referred to as "computer program"), and the processor is configured to execute the machine-readable instructions to implement the methods described with reference to FIG. 1 to FIG. 5.

An embodiment of the present disclosure further provides a computer-readable storage medium having stored thereon a computer program, and the computer program, when being executed by a processor, implements the methods described with reference to FIG. 1 to FIG. 5.

In an illustrative embodiment, the processor may be configured to implement or execute various illustrative logic blocks, modules, and circuits described in conjunction with the present disclosure, such as a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof. The processor may also be a combination that implements the computing functions, such as a combination of one or more microprocessors, a combination of a DSP and a microprocessor, or the like.

In an illustrative embodiment, the memory may be, for example, a ROM (Read Only Memory), a RAM (Random Access Memory), an EEPROM (Electrically Erasable Programmable Read Only Memory), a CD-ROM (Compact Disc Read Only Memory) or other optical disk storage, optical disc storage (including compact disc, laser disc, optical disc, digital versatile disc, Blu-ray disc, etc.), magnetic disk storage media or other magnetic storage devices, or any other medium that can be used to carry or store program codes in the form of instructions or data structures and can be accessed by a computer, but is not limited to these.

It should be understood that although the steps in the flowcharts of the accompanying drawings are shown in sequence as indicated by the arrows, these steps are not necessarily performed in the order indicated by the arrows. Unless otherwise specified herein, there is no strict order restriction on the performance of these steps, and they can be performed in other orders. In addition, at least some of the steps in the flowcharts of the accompanying drawings may include multiple sub-steps or multiple stages, and these sub-steps or stages are not necessarily performed at the same time, but can be performed at different times, and the performance order is not necessarily sequential, but they can be performed in turn or alternately with at least portion of other steps or e sub-steps or stages of other steps.

Although the present disclosure has been shown and described with reference to certain embodiments thereof, it will be understood by those skilled in the art that various changes in form and details may be made without departing from the scope of the present disclosure. Therefore, the scope of the present disclosure should not be limited to the embodiments but should be defined by the appended claims and their equivalents.

## Claims

1. A communication method for Tunneled Direct Link Setup (TDLS), applied to a first station device (STA), the communication method comprises:
determining a first frame, where the first frame indicates a response to a second STA requesting to set up a TDLS peer Power Saving Mode (TDLS peer PSM) with a third STA on a first link; and
sending the first frame on a second link,
wherein the first STA and the third STA belong to a same non-Access Point Multi-Link Device (non-AP MLD).

2. The communication method according to claim 1, wherein the first frame comprises a status identifier, and the status identifier indicates an acceptance situation for the second STA requesting to set up the TDLS peer PSM.

3. The communication method according to claim 2, wherein, in a case where the status identifier is set to "reject with alternative provided", the first frame further comprises a wakeup schedule information element; and
in a case where the status indicator is set to "success" or "reject", the first frame does not comprise the wakeup schedule information element.

4. The communication method according to claim 1, wherein the method further comprises:
receiving a second frame on the second link, wherein the second frame indicates that the second STA requests to set up the TDLS peer PSM on the first link.

5. The communication method according to claim 4, wherein the first frame comprises a Basic Service Set Identifier (BSSID), and the BSSID is an identifier of a basic service set to which an access point device corresponding to a third link for establishing the first link belongs, and
wherein the BSSID is the same in the first frame and the second frame.

6. The communication method according to claim 4, wherein the first link comprises a plurality of TDLS links, and the second frame comprises wakeup schedule information elements corresponding to the plurality of TDLS links, and
wherein the first frame comprises status identifiers, Basic Service Set Identifiers (BSSIDs), or wakeup schedule information elements corresponding to the plurality of TDLS links, respectively.

7. A communication method for a Tunneled Direct link Setup (TDLS), applied to a second station device (STA), the method comprising:
receiving a first frame from a first STA, wherein the first frame indicates a response to the second STA requesting to set up a TDLS peer Power Saving Mode (TDLS peer PSM) with a third STA on a first link, and the first frame is received on a second link; and
wherein the first STA and the third STA belong to a same non-Access Point Multi-Link Device (non-AP MLD).

8. The communication method according to claim 7, wherein the first frame comprises a status identifier, and the status identifier indicates an acceptance situation for the requesting to set up the TDLS peer PSM.

9. The communication method according to claim 8, wherein, in a case where the status identifier is set to "reject with alternative provided", the first frame further comprises a wakeup schedule information element; and
in a case where the status indicator is set to "success" or "reject", the first frame does not comprise the wakeup schedule information element.

10. The communication method according to claim 7, wherein the communication method further comprises:
sending a second frame on the second link, wherein the second frame indicates that the second STA requests to set up the TDLS peer PSM on the first link.

11. The communication method according to claim 10, wherein the first frame comprises a Basic Service Set Identifier (BSSID), and the BSSID is an identifier of a basic service set to which an access point device corresponding to a third link for establishing the first link belongs, and
wherein the BSSID is the same in the first frame and the second frame.

12. The communication method according to claim 10, wherein the first link comprises a plurality of TDLS links, and the second frame comprises wakeup schedule information elements corresponding to the plurality of TDLS links, and
wherein the first frame comprises status identifiers, Basic Service Set Identifiers (BSSIDs), or wakeup schedule information elements corresponding to the plurality of TDLS links respectively.

13. A communication device, applied to a first station device (STA), the communication device comprising:
a processing module, configured to determine a first frame, wherein the first frame indicates a response to a second STA requesting to set up a TDLS peer Power Saving Mode (TDLS peer PSM) with a third STA on a first link, and the first STA and the third STA belong to a same non-Access Point Multi-Link Device (non-AP MLD); and
a transceiver module, configured to send the first frame on a second link.

14. A communication device, applied to a second station device (STA), the communication device comprising:
a transceiver module, configured to receive a first frame from a first STA, wherein the first frame indicates a response to the second STA requesting to set up a TDLS peer Power Saving Mode (TDLS peer PSM) with a third STA on a first link, and the first frame is received on a second link; and
wherein the first STA and the third STA belong to a same non-Access Point Multi-Link Device (non-AP MLD).

15. An electronic device, wherein the electronic device comprises a memory, a processor, and a computer program that is stored in the memory and executable on the processor, and the processor, when executing the program, implements the method according to any one of claims 1 to 6 or the method according to any one of claims 7 to 12.

16. A computer-readable storage medium, wherein the computer-readable storage medium stores thereon a computer program, and the computer program, when being executed by a processor, implements the method according to any one of claims 1 to 6 or the method according to any one of claims 7 to 12.
